# EUROPEAN PATENT APPLICATION

(11) **EP 1 507 391 A2**
(43) Date of publication of application: **16.02.2005**
(21) Application number: 04019071.2
(22) Date of filing: 11.08.2004
(51) Int. Cl.: H04M 1/725

(54) **A portable telephone including an animation function and a method of controlling the same**

(30) Priority: 14.08.2003 JP 2003293441
(71) Applicant: NEC CORPORATION, Tokyo (JP)
(72) Inventor: Nagao, Yasutaka, Minato-ku Tokyo (JP)
(74) Representative: Glawe, Delfs, Moll & Partner

(57) **Abstract**

A portable telephone and a method of controlling the same, by which an animation of a character can be displayed in a relatively simple way on a display screen of the telephone in association with voices and sounds of a call. A storage of a portable telephone beforehand stores character data representing a character. The telephone detects a level of an audio signal received from the other party to display an animation of the character on a display thereof in response to the audio signal level. The character data includes subparts obtained by modifying the contours of parts of main sections of the character. The telephone replaces subparts according to the audio signal level. The telephone can also make the character act by receiving a control signal for the character from the other party's terminal during a call.

## Description

### BACKGROUND OF THE INVENTION

The present invention relates to a portable or mobile telephone, and in particular, to a portable telephone including an animation function to display a character during a call and a method of controlling the same.

### Description of the Prior Art

There has been known a portable telephone capable of displaying on a display thereof a still picture of a character and/or a scene during a call.

There has also been proposed a mobile telephone terminal capable of displaying an animation of a character during a call. These devices aim at improving communication during a call.

Japanese Patent Application Laid-Open No. 2001-186222 discloses a mobile telephone in which an animation of a picture such as a flower stored in an animation picture memory is displayed on a display by sensing an operation of the telephone such as a reception or transmission of audio signals. However, according to the technique, an animation is displayed regardless of conversation between speakers or communicating parties.

Japanese Patent Application Laid-Open No. 2002-215180 provides a communicating device in which an animation of a face is displayed on a display of a communicating device on a receiver side according to audio signals communicated between the communicating parties. However, a large system is required, for example, to process signals by the communicating device on the receiver side. That is, in accordance with the invention, the receiver-side communicating terminal includes an action inference database containing predetermined audio patterns and change patterns of expressions of a face in basic skeletal structure corresponding to the audio patterns. According to an audio pattern extracted from audio data received from a calling party, a pattern of a change in a face expression is retrieved from the database. The pattern is related to the received audio signal to adjust timing therebetween. An action of the change pattern obtained from inference data for a face expression is mapped onto a face contour model beforehand registered to the communicating device on the receiver side to resultantly produce a mobile picture.

Japanese Patent Application Laid-Open No. 2003-964 describes a technique related to a mobile telephone toy. When the user operates the toy telephone for a call, an animation of an animal such as a cat is displayed on a display of the toy phone by changing a plurality of frames of picture data of the animal, the frames showing slightly different actions of the cat. However, this animation is not associated with voices or sounds of a call.

Japanese Patent Application Laid-Open No. 2003-16475 provides a technique in which characteristic or feature points of a face are extracted from an input face image of an object, and then data representing coordinates of the feature points are transmitted to a receiver terminal together with a character image. On the receiver side, the character image is modified in association with the data of coordinates of the feature points to thereby display a mobile picture. In the technique, the character data is also sent to the other party. Therefore, it is required to arrange a device to transmit information on the character data.

According to the techniques of the prior art, the animation is not related to the audio signal, the character information is required to be transmitted from the information sending side. Besides, it is required to construct the terminal in a large system.

### SUMMARY OF THE INVENTION

It is therefore an object of the present invention to provide a portable telephone and a method of controlling the same in which an animation of a character can be displayed on a display screen of the telephone in association with voices and sounds of a call in a relatively simple way.

Another object of the present invention is to provide a portable telephone and a method of controlling the same by which it is possible to make a character imitating the user of the telephone perform actions in association with a level of voices and sounds of a call.

Still another object of the present invention is to provide a portable telephone and a method of controlling the same in which it is possible to make a character act in response to a reaction of a speaker of the call.

Further another object of the present invention is to provide a method of producing character data for use with a portable telephone of this kind.

Another object of the present invention is to provide a service method in which a request to produce character data for use with a portable telephone of this kind is received and the data is produced to be delivered to the portable telephone.

In accordance with the present invention, there is provided a portable telephone terminal including an image display device, a storage for storing therein character data representing a character, an audio level monitor device for detecting a level of an audio signal, and a control device for displaying an animation of a character in response to an audio level.

In accordance with the present invention, there is provided a portable telephone terminal including an image display device, a storage for storing therein character data representing a character, and a control device for displaying an action of a character on the image display device in response to a control signal sent from a portable telephone terminal of the other party.

In accordance with the present invention, there is provided a portable telephone terminal including an image display device, a storage for storing therein character data representing a character, an audio level monitor device for detecting a level of an audio signal, and a control device for displaying an animation of a character in response to an audio level. The character displayed on the portable telephone terminal can be made to act by operating keys of the portable telephone terminal.

In accordance with the present invention, there is provided a control method of controlling a portable telephone terminal. The method includes the steps of transmitting a call signal including information on a telephone number by a call issuing operation, retrieving a character stored in association with a telephone number and displaying the character, having a conversation after a call is set up to establish communication between portable telephone terminals of communicating parties, monitoring an audio signal level of an audio signal received in the step of having a conversation, and displaying an animation of the character when the audio level is equal to or more than a predetermined level.

In accordance with the present invention, there is provided a control method of controlling a portable telephone terminal. The method includes the steps of retrieving, in response to information on a telephone number included in a call signal received from the other party, a character stored in association with a telephone number, displaying the character retrieved by the retrieving step, having a conversation after a call is set up between portable telephone terminals of communicating parties, monitoring an audio signal level of an audio signal received in the step of having a conversation, and displaying an animation of the character when the audio level is equal to or more than a predetermined level.

In accordance with the present invention, there is provided a service providing method for providing character data to display an animation of a character on a portable telephone terminal. The method includes the steps of attaching by the portable telephone terminal a picture data file to an e-mail message to be transmitted, receiving by a mail server the mail and extracting the picture data file from the mail, transferring the picture data file to a contents processing server, dividing by the contents processing server the picture data file into a plurality of parts of main sections of the character and creating a plurality of subparts by modifying the contours of the main sections, transferring a processed file obtained as a result of the preceding step to the mail server, and attaching by the mail server the processed file to mail and transmitting the mail to the portable telephone terminal.

In accordance with the present invention, there is provided a program for making a server create character data to display an animation of a character on a portable telephone terminal. The program makes the server execute the steps of creating character parts of main sections of a picture based on a picture data file, and creating a plurality of subparts by modifying the character parts of the main sections.

In accordance with the present invention, there is provided a program for making a portable telephone terminal execute the steps of requesting an operator to specify a telephone number, setting up a call to establish communication using information including the telephone number, searching through a telephone directory, selecting and displaying a character registered to the telephone directory, and changing, in response to the setup of the call, a subpart representing a modified contour corresponding to a character part of a main section of the character and displaying an animation of the character.

In accordance with the present invention, the character data includes a plurality of character parts configuring main sections of the character and the character parts includes a plurality of subparts obtained by modifying the contours of the main sections of the character. In response to an audio level, the animation is displayed by changing a subpart of a particular character part of the character.

In accordance with an embodiment of the present invention, the character is a character imitating an owner of the portable telephone terminal assigned with a telephone number.

In accordance with an embodiment of the present invention, a vibrator of a portable telephone terminal of a communicating party is controlled in response to a key operation.

In accordance with an embodiment of the present invention, a control operation is conducted such that a control signal generated in response to a key operation makes an image display device of a portable telephone terminal of a communicating party flash a background of a display screen thereof.

In accordance with the present invention, the part of the mouth of a character imitating the communicating party moves on the screen in response to a voice level of the communicating party. Therefore, it is possible to enjoy a call using images in addition to voices and sounds with the volume of information, which is considerably smaller than that of an actual mobile picture or images.

In accordance with the present invention, the speaker can determine the reaction through a key operation to send information to display an expression of the character on the display section of the terminal of the other party. Therefore, various kinds of information items can be provided for communication between quite intimate friends.

In accordance with the present invention, the user of a portable telephone terminal can operate the terminal to make a character of a communicating party displayed on the terminal conduct an action. As a result, the terminal can be provided as a device for entertainment.

In the portable telephone in accordance with the present invention, a character imitating a communicating partner is stored and the character is made to act according to, for example, a voice level of the communicating partner. Resultantly, there can be provided a quasi television (TV) phone function using characters. Since data items of the characters are beforehand stored in the portable telephone, the quasi TV phone function can be provided without imposing load onto communication infrastructure. For actions of characters, it is only necessary to additionally install associated functions on the terminal side. Therefore, the present invention is applicable to the second generation portable communication system. Moreover, any particular contract is not required between the user of the portable telephone and a communications carrier.

In accordance with the present invention, interactive communications which are not possible by an ordinary TV telephone can be carried out. That is, predetermined operations are conducted on both communicating parties to communicate control signals to each other so that each party can operate a character and a terminal device of the communicating partner. Therefore, a particular action of a character which cannot be expressed by an actual video image can be obtained. This is effective also when the third generation portable telephone system is broadly developed and comprehensive TV telephone environments are established.

In accordance with the present invention, the character production service provider provides a business of model a service. With the service, the character production service provider sets up a server exclusively used to produce characters such that a photo transmitted together with an e-mail massage is processed into character data having a quantity of data less than that of the original data to provide a file of the character data. Therefore, it is not required for the user of the portable telephone to generate character data.

### BRIEF DESCRIPTION OF THE DRAWINGS

The objects and features of the present invention will become more apparent from the consideration of the following detailed description taken in conjunction with the accompanying drawings in which:
FIG. 1 is a sequence diagram to explain a signal sequence between portable telephones via a network and processing of signals in the portable telephones in accordance with the present invention;
FIG. 2 is a view showing an appearance of a portable telephone in accordance with the present invention;
FIG. 3 is a functional block diagram showing a configuration of a portable telephone in accordance with the present invention;
FIG. 4 is a functional block diagram showing a configuration of a signal processing section in accordance with a first embodiment of the present invention;
FIG. 5 is a graph showing changes in waveforms of audio signal levels in the first embodiment;
FIG. 6 is a view showing an example of a character displayed in accordance with the present invention;
FIG. 7 is a table showing the data structure of a telephone directory;
FIG. 8 is a diagram showing a relationship between a character, parts of main sections of the character, and variations indicating deformed or modified contours of the main sections;
FIG. 9 is a flowchart showing operation to display a character in the first embodiment;
FIG. 10 is a diagram showing subparts of a character and a character with subparts arranged therein;
FIG. 11 is a functional block diagram showing a configuration of a signal processing section in accordance with a second embodiment of the present invention;
FIG. 12 is a table showing a relationship between key types, key operations, and operations in a communicating terminal associated with the key operations;
FIG. 13 is a flowchart to explain operation to display a character in the second embodiment;
FIG. 14 is a flowchart to explain operation to display a character in a third embodiment;
FIG. 15 is a flowchart to explain operation to display a character in a fourth embodiment; and
FIG. 16 is a flow diagram to explain a character data providing service method.

### DESCRIPTION OF THE EMBODIMENTS

Referring next to the drawings, description will be given of embodiments in accordance with the present invention.

### First embodiment

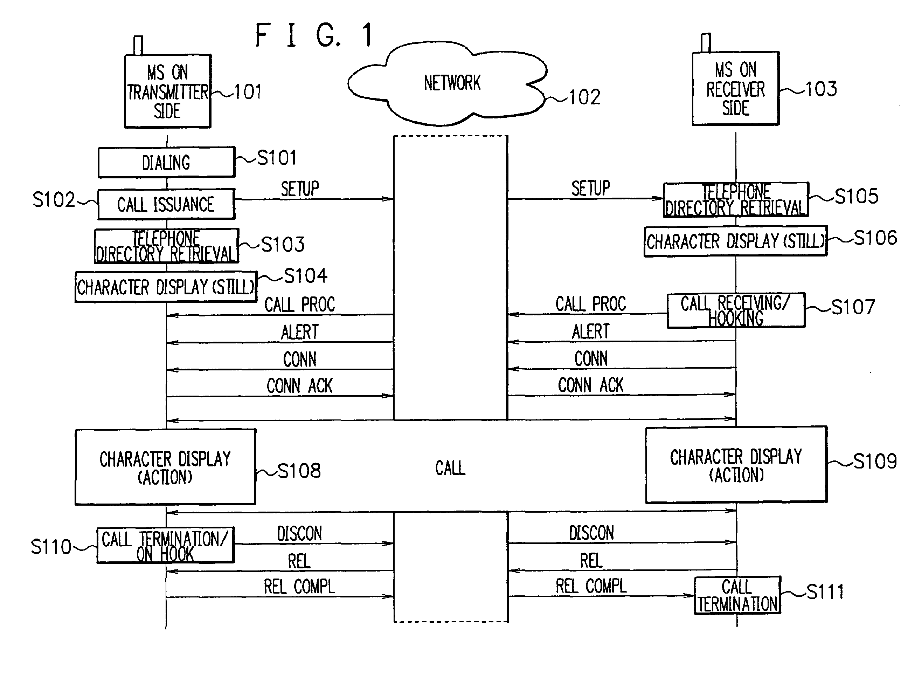

FIG. 1 is a sequence diagram showing a signal processing sequence between portable telephones via a network and processing of signals in the portable telephones in accordance with the present invention.

In FIG. 1, the reference numerals 101 and 103 represent portable telephones (MS) each of which includes a radio device. In this case, the telephones 101 and 103 are installed on the call issuing and receiving sides, respectively. The terminals conduct communication via a network 102 with each other. To initiate a call using the telephone 101, the user thereof inputs or dials a telephone number (S101) or selects a desired telephone number from a telephone directory disposed in the telephone 101 and conducts a call issuing operation (S102) to send a signal including the destination telephone number to the network 102 to thereby set up a call for establishing communication. In response to the call issuing operation, the system accesses the electronic telephone directory having stored characters corresponding to telephone numbers and reads out a character associated with the telephone number. The system displays a still picture of the character on a display screen of the terminal (S104).

The communicating portable telephone 103 receives the call setup signal (SETUP) from an interface of the network 102 and then the user operates keys to achieve a call receiving operation and a hooking operation (S107). As a result, a call setup reception signal (CALL PROC) is fed to the network interface. The telephone 101 receives the call setup reception signal from the network interface.

The telephone terminal 103 sends an Alert signal. The terminal 101 receives the Alert signal from the network. The telephone terminal 103 transmits a Connect signal. The network sends a response, i.e., the Connect signal to the terminal 101. The terminal 101 returns an acknowledgement, i.e., a Connect Ack signal thereto. The network sends the Connect Ack signal to the terminal 103. Through the operation sequence, a call is set up.

In response to a telephone number included in the Setup signal, the terminal 103 activates its telephone directory to retrieve an associated telephone number (S105). If the telephone number is present as a result of the retrieval, the terminal 103 makes a check to determine whether or not a character associated with the telephone number has been stored therein. If the character is beforehand registered to the directory, the terminal 103 reads the character therefrom and displays a still picture thereof on its display screen (S106).

When the call is established, the terminals 101 and 103 enter a call state to make a conversation therebetween. In this state, each terminal can display an animation of a character corresponding to a telephone number of the communicating party (S108). The animation of the character can be displayed in response to a level of an audio signal received from the communicating party, which will be described later in detail.

To terminate a call, the user operates a key of the terminal 101 to send a Disconnect signal to the network, which in turn feeds the signal to the telephone 103. The telephone 103 returns a Release signal to the network, which then delivers the signal to the telephone 101. In response thereto, the telephone 101 sends a Release Complete signal to the network. The network feeds the signal to the telephone 103, which resultantly enters an on-hook state.

The sequence described above in conjunction with FIG. 1 including the call setup, the call or conversation, the disconnection, and the release is substantially the same as that of the second generation (2G) mobile communication system. Therefore, the character animation can be displayed without adding any function to the network.

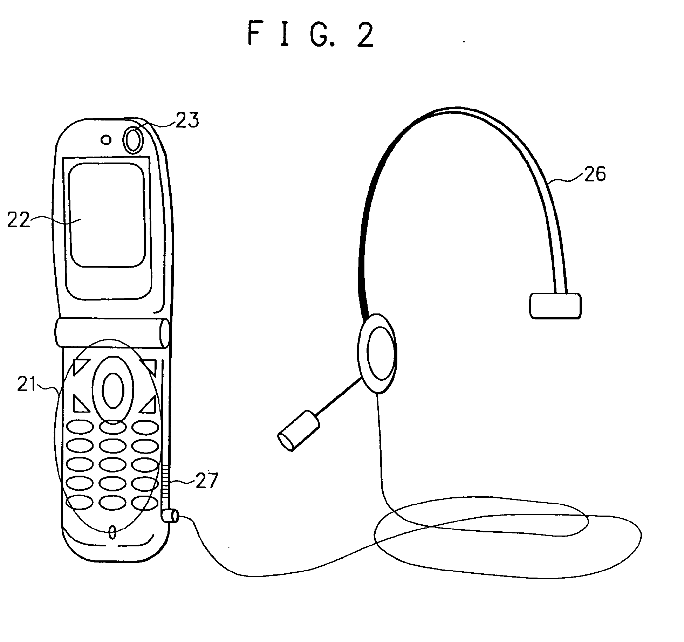

FIG. 2 shows an appearance of the portable telephone terminal in accordance with the present invention. The telephone 101 includes a key-in section 21 to conduct various operations such as inputting a telephone number, a display section 22 to display the input telephone number and various setting items as well as characters and animations, a camera section 23 to shoot a picture, an ear receiver 24, and a transmitter 25. To conduct a call with a communicating party while watching an animation of a character during the call, a headset including functions of an earphone and a microphone can also be connected to the terminal. A numeral 27 indicates a serial interface.

Consequently, the portable telephone includes, in addition to ordinary telephone call functions, a telephone directory function, an animation display function, a picture shooting function, and a mail receiving and transmitting function.

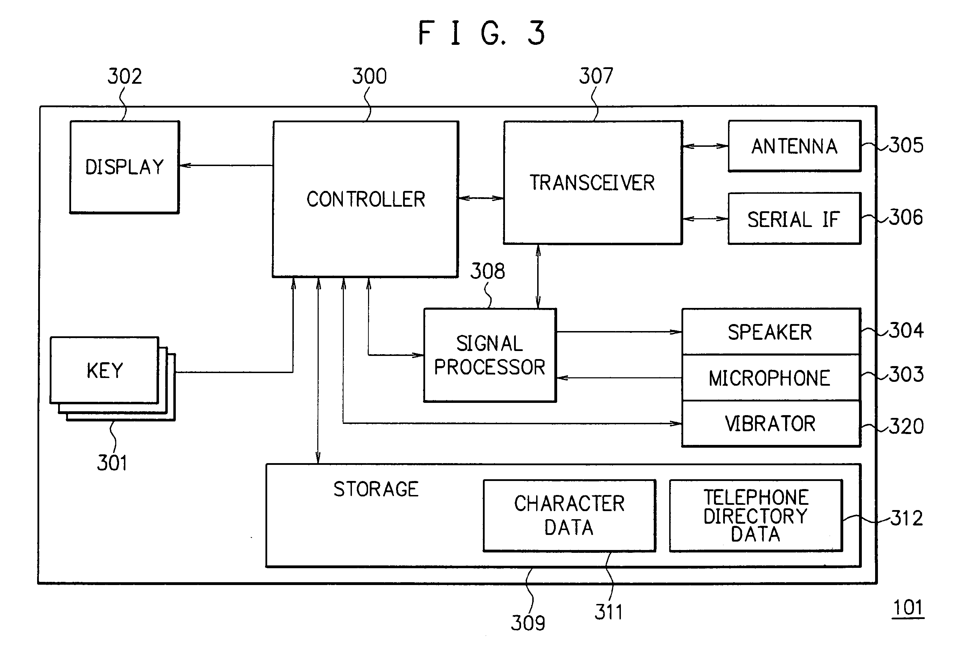

FIG. 3 is a functional block diagram showing an internal configuration of the portable telephone terminal 101. The terminal 101 includes a key section 301 as an input module including various keys for key operations, a display 302, a microphone 303 and a speaker 304 to communicate voices and sounds when having a conversation on the terminal 101, and a vibrator 320 to notify events such as reception of a call. The terminal 101 further includes an antenna 305 as an interface to communicate radio waves with a wireless access network and a serial interface 306 for a direct connection to an external terminal device such as a personal computer (PC). The telephone 101 also includes a transceiver section 307, a signal processor 308, a storage 309, and a controller 300.

The transceiver section 307 includes a receiver section and a transmitter section (not shown). The receiver section amplifies a high-frequency signal induced by a radio wave attained by the antenna 305 to supply the amplified signal to the signal processor 308. The transmitter section amplifies a signal from the signal processor 308 and delivers the resultant signal to the antenna 305.

The signal processing section 308 conducts an analog-to-digital conversion for a call signal from the microphone 303 and modulates the converted signal. The section 308 also demodulates a signal from the transceiver 307 and conducts a digital-to-audio conversion for the demodulated signal to deliver the resultant signal to the speaker 304.

The storage 309 is a memory to temporarily or fixedly keep data and stores various programs to control operations of the portable telephone 101. The storage 309 electrically stores data items in a telephone directory data section 312 and a character data section 311.

The controller 300 includes a central processing unit (CPU) to control the transceiver 307 and the signal processor 308. The controller 300 also conducts a control operation in response to a key-in item received through the key-in section 21 to execute necessary processing for displaying a character and its animation on the display 302. The controller 300 further controls other various functional operations of the telephone 101. For this purpose, the controller 300 is electrically coupled with the respective functional blocks.

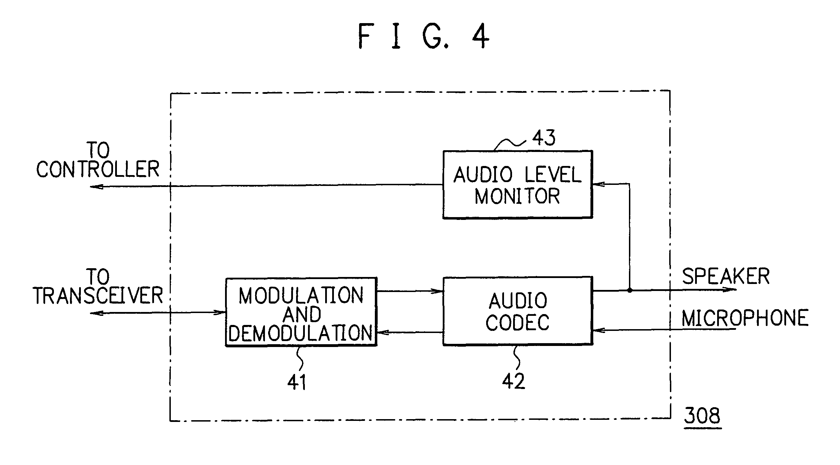

FIG. 4 is a functional block showing an internal configuration of the signal processing section 308. The section 308 includes a modulation and demodulation or modem section 41, an audio codec 42, and an audio level monitor section 43. The codec 42 includes an A/D converter and a D/A converter (not shown). The A/D converter converts an audio analog signal into a digital baseband signal, and the D/A converter converts a digital baseband signal into an analog signal. The modem 41 conducts modulation to send a baseband signal on a carrier wave and carries out demodulation to obtain a baseband signal from a modulated high-frequency signal.

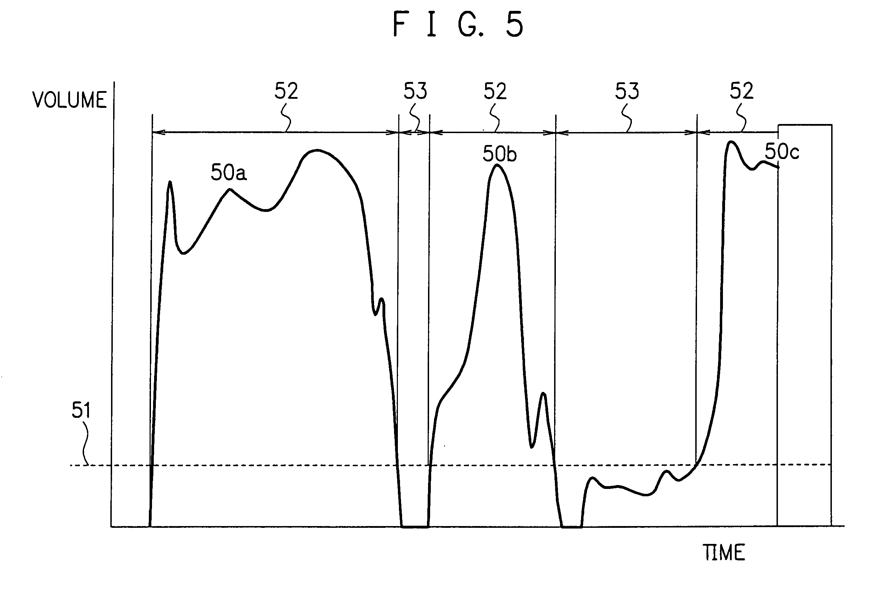

The audio level monitor section 43 monitors a volume level of the signal received from the other party. If the level is equal to or more than a predetermined value, the section 43 assumes that the communicating party is talking and notifies the condition to the controller 40. Referring also to FIG. 5 showing waveforms 50a, 50b, and 50c of received volume levels, the monitor section 43 assumes that the other party is talking if the waveform exceeds a predetermined level 51. Otherwise, the section 43 assumes that the other party is not talking.

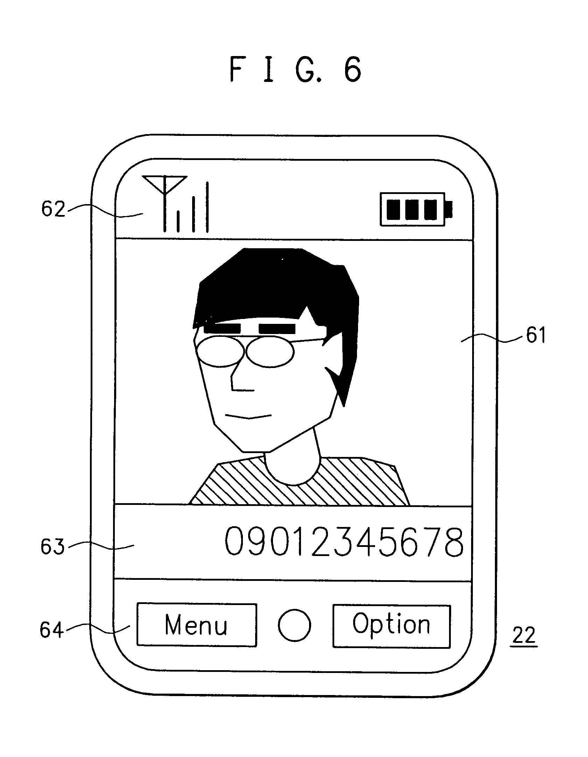

FIG. 6 shows a display example of a character in accordance with the present invention. In FIG. 6, a character 61 of the other party is displayed on a display section 22 of a portable telephone terminal together with an icon 62 indicating states of radio waves and batteries of the terminal. There is also presented the telephone number of the other party 63 and a menu 64 for operation guidance.

Incidentally, the character data area 311 of the storage 309 shown in FIG. 3 stores main sections or parts representing characteristic parts of a character and variation items or sub-parts representing the modified contours of the respective main parts.

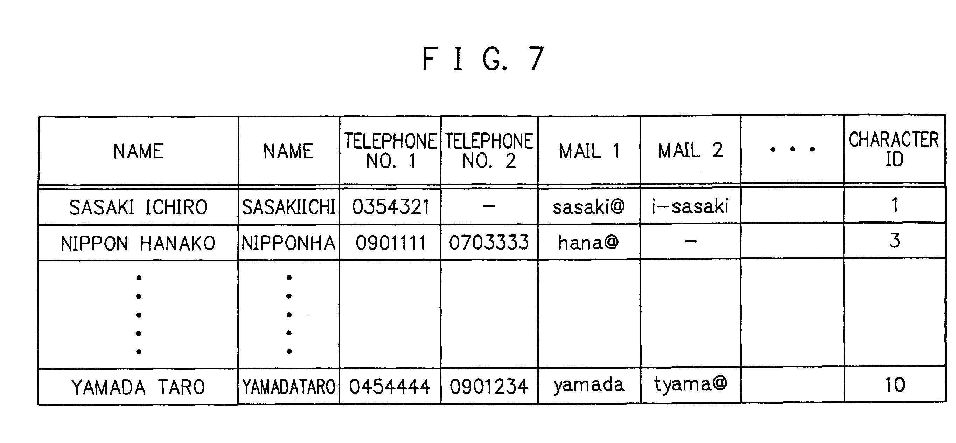

Telephone directory data in the storage 309 includes entries including a name, a telephone number, a mail address or an e-mail address, and an address as shown in FIG. 7. The data also includes an identifier (ID) as a data element of the directory data to indicate character data. When a telephone number is selected, a character ID stored in association with the telephone number is determined. According to the ID, associated character parts are read out of the data section 311 to be displayed as shown in FIG. 6.

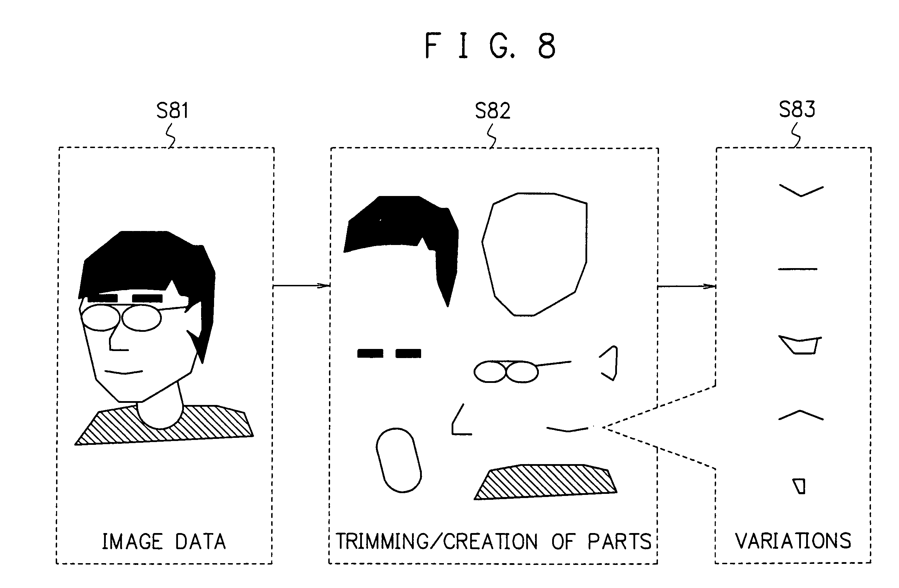

FIG. 8 schematically shows a relationship between a character, main parts of the character, and variations indicating the deformed or modified contours of the main parts together with a production process. A character is a section of a human centered on his or her face. Main parts 82 include a face contour, a head and its contour, eyebrows, ears, a nose, a mouth, a neck, and a shirt. Variations 83 include, for example, various deformed contours of parts around the mouth. Although not shown, variations of the eyebrows include, for example, a triangular contour and an ordinary contour of the eyebrows, and variations of eyes include a round contour and an ordinary contour thereof.

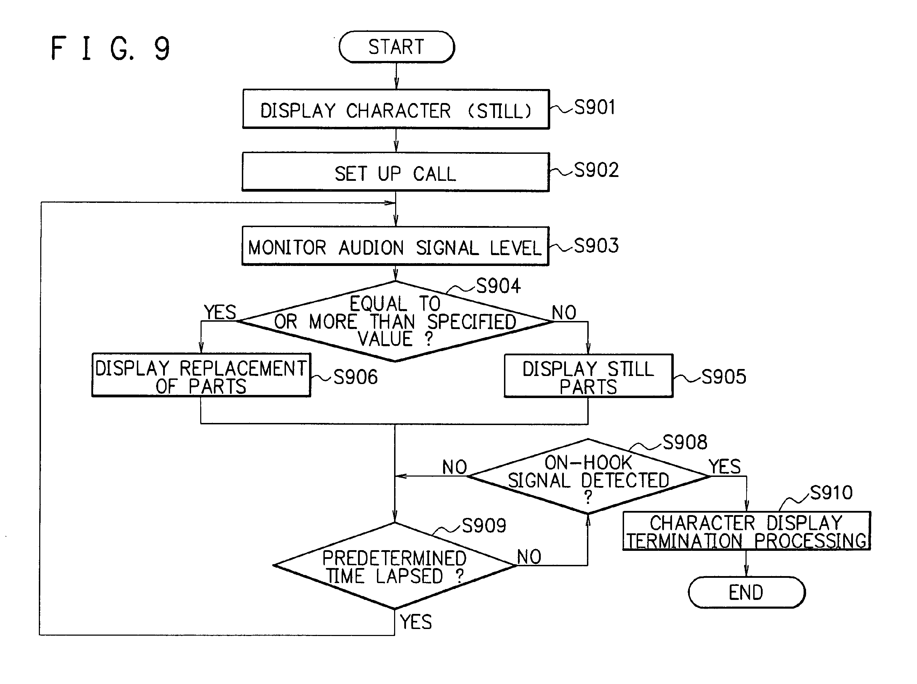

Referring now to FIG. 9, description will be given of an animation of a character displayed during a call. When a call is set up (S902) and a call state is established, the terminal changes from a step (S901) of displaying a still picture of a character to a next step. In the step, according to a result of the audio level monitoring, the character is made to act on the display. The action of the character is mainly centered on the mouth in this case. The controller 300 periodically monitors the audio level (S903) to determine whether or not the audio level of the received call is equal to or more than a specified value (S904). If the level is less than the specified value, the parts of main sections are placed at positions indicated by prescribed coordinates to display a still picture of an expression (S905).

If the level is equal to or more than the specified value, variations of parts mainly associated with the mouth are changed to display a character (S906). For example, the variations of the mouth shown in FIG. 8 are sequentially or randomly replaced in the display. The replacement is carried out according to a result of the monitoring of the audio level at sampling points along a time axis of the audio waveforms shown in FIG. 5. Consequently, control returns again to step S903 at an interval of a predetermined period of time, i.e., a sampling period (S909). As a result, the mouth moves in an animated image of the character presented on the display.

In each of the sampling period, the audio level is monitored and subparts are replaced to display an animated image of the character. When an on-hook signal or a call termination signal is sensed, the terminal executes character display termination processing (S910).

The audio level is detected with respect to each sampling in the embodiment described above. However, since the operation is not the reproduction of voices and sounds but the character animation, the interval of time for the operation may be longer than the sampling period. This reduces the amount of information required for the character animation and the processing becomes easier. To reduce the amount of information, there may be used two or three subparts associated with the mouth.

Each subpart includes information indicating a point as a reference point for display and its coordinates. When displaying a character image, the terminal gathers the subparts according to the reference points and their coordinates to form the character.

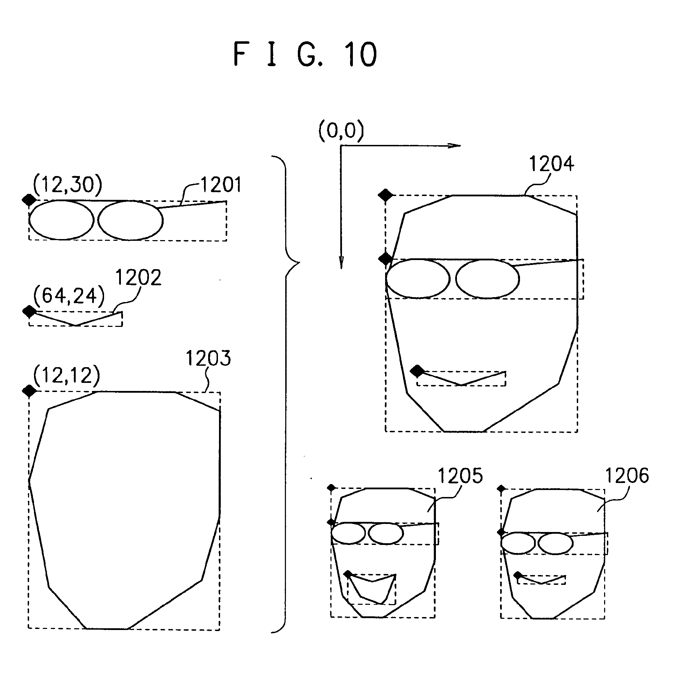

Referring now to FIG. 10, description will be given of a method of displaying a character with parts including the face contour, the mouth, and a pair of glasses. FIG. 10 shows a subpart 1201 which is a variation of the glasses as a part, a subpart 1202 as a variation of the mouth as a part, and a subpart 1203 indicating a variation of the face contour as a part. Each subpart has a point corresponding to an origin of the subpart (a solid mark of a quadrilateral in an upper-left corner of the subpart in this example) and a pair of coordinates of a coordinate system, the coordinates indicating a point at which the character associated with the point is displayed. The points are indicated by coordinates (12, 30) for the part 1201, (64, 24) for the part 1202, and (12, 12) for the part 1203.

In the character displaying operation, parts are arranged according to the coordinates assigned to the points of subparts thereof to resultantly present a character 1204. Character display (still picture) S901 of FIG. 9 indicates that a still picture is displayed as described above.

Since display positions of the respective subparts are controlled according to their coordinates, the expression of the character can be changed by replacing some of the subparts.

Fig. 10 includes a character display 1205 in which one of the variations of the part of the mouth is replaced by a subpart of another variation thereof.

FIG. 10 also includes a character display 1206 in which coordinates of points of subparts are changed to alter the expression of the face. Specifically, the coordinates of the points of subparts, i.e., the glasses and the mouth are changed.

In the first embodiment, the mouth and its periphery of a character imitating the communicating party move on the screen in response to an audio level of the speaker. Therefore, using an information quantity considerably less than that of an actual mobile picture, it is possible for both communicating parties to enjoy the call with such images in addition to voices and sounds.

### Second embodiment

While the first embodiment in which an animation of a character is presented at timing determined by whether or not the audio signal level exceeds a predetermined value, the second embodiment achieves an animation display in response to a control signal inserted during a call. Since the main parts of the description of the first embodiment also apply to the second embodiment, description will be given mainly of differences therebetween by referring to the drawings including those used in the description above.

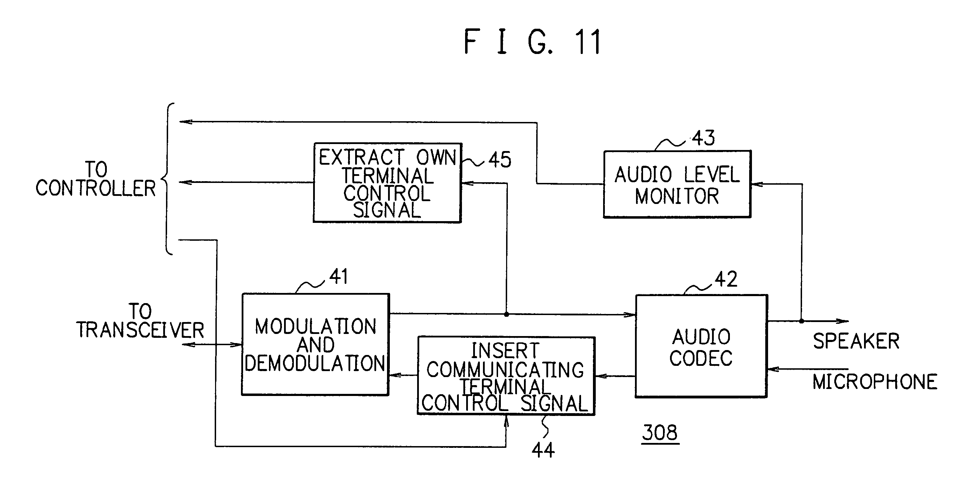

Referring now to FIG. 11, the signal processing section 308 of the second embodiment includes an own terminal control signal extracting section 45 and a communicating terminal control signal inserting section 44. The signal inserting section 44 inserts a control signal to operate a communicating portable telephone terminal in a band of a baseband signal, for example, by inserting the control signal in an empty bit of a header of an audio frame. When a particular key is depressed during a call, the controller produces and supplies the control signal to the signal insertion section 44.

The control signal extracting section 45 extracts a control signal inserted in the baseband by the communicating terminal and supplies the signal to the controller. The controller interprets or decodes the control signal to conduct an associated control operation.

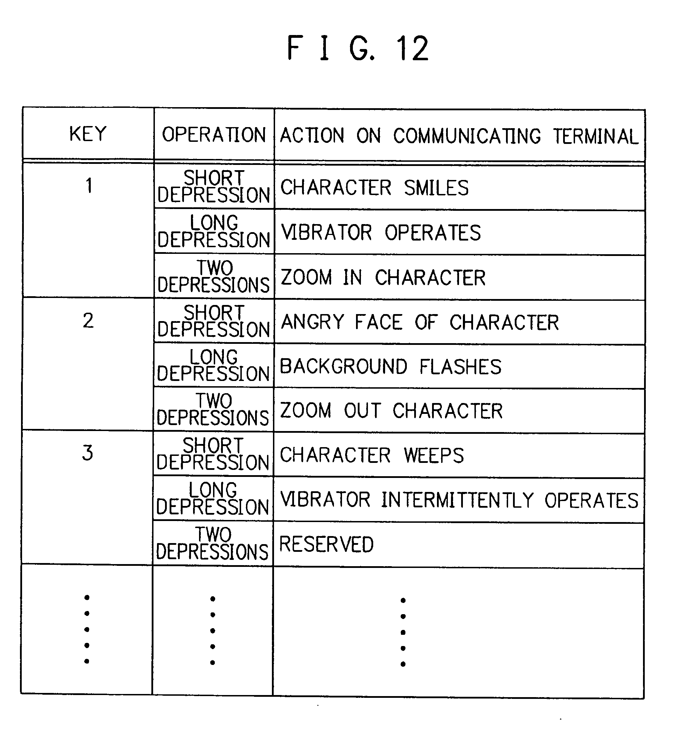

The control signal is determined in advance to be identified according to a type of a key in the key-in section and a state of the key operation during a call. FIG. 12 shows, in a table, operations of the communicating terminal with respect to each of keys 1, 2, and 3 and key pressing states such as "short press", "long press", and "double press" and.

The table applies to both of the terminals on the transmitting and receiving sides. For example, when key 1 is depressed for a short period of time during a call, the controller produces a control signal specifying a smiling face associated with the press and sends the signal to the other party. Similarly, a short press of key 2 and a short press of key 3 respectively correspond to an angry face and a weeping face.

When the control signal indicates a smiling face, the controller replaces an ordinary contour of eyes with a variation of a round contour of eyes. When the signal indicates an angry face, the controller substitutes a variation of a circumflex contour of the eyebrow for an ordinary contour of the eyebrows. When the signal indicates a weeping face, the controller replaces an ordinary contour of eyes with a variation of eyes full of tears.

The double pressing of keys 1 and 2 indicates "zoom in" and "zoom out" of the character display, respectively. The long pressing of key 2 means flashing of the background of the character.

Although not related to any action of the character, The long pressing of key 1 indicates a predetermined operation of the vibrator with a predetermined period. The long pressing of key 3 means an intermittent operation of the vibrator.

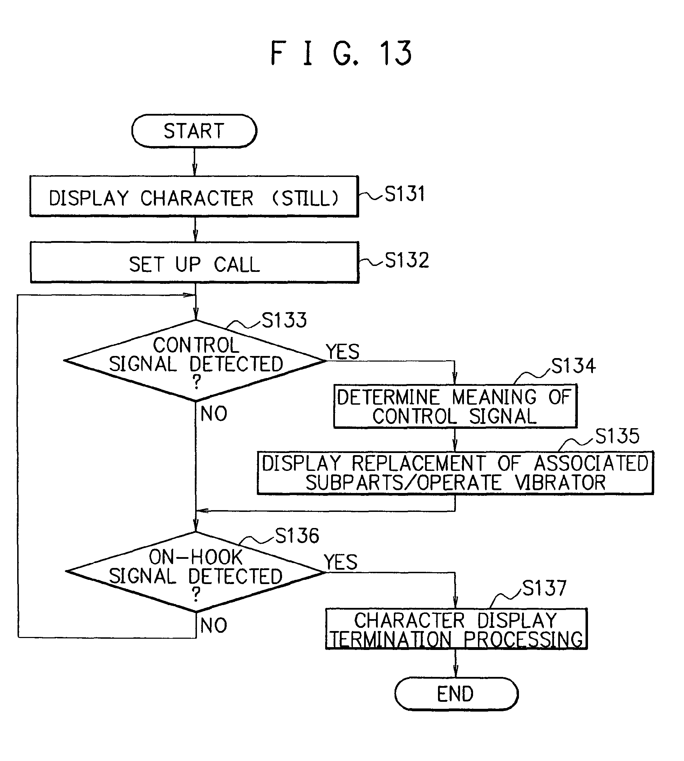

Referring to FIG. 13, when a still picture of a character is displayed (S131) and the call is set up (S132), the controller 300 of FIG. 3 monitors a control signal from the signal extracting section 45 of FIG 11 (S133) to determine the meaning of the control signal (S134). According to the value of the signal, the controller 300 replaces associated subparts to display the character or operates the vibrator (S135). Since the controller 300 continuously monitors the control signal until an on-hook signal is sensed, the expression of the character can be changed using the control signal. When the on-hook signal is sensed (S136), the controller executes processing to terminate the character display (S137).

As above, during a call, the speaker can determine his or her reaction by a key operation to send the reaction to the other party to display an associated expression of the character on the display of the other party's terminal. Besides, by a key operation of a particular key, the speaker can notify the reaction to the communicating partner through an operation of the vibrator of the other party's terminal. Resultantly, various information items can be communicated during a call, and hence this is quite suitable for communication between intimate friends.

### Third embodiment

In the third embodiment, the speaker can make an animation of a character of a communicating partner displayed on his or her own terminal according to control of his or her own terminal. For example, even when the partner is not talking during a call, that is, even when an audio level synchronizing object is not operating, it is possible to make the character wink by periodically replacing variations of parts of eyes. By changing coordinates of the head and the shoulders, it is possible to make the character act as if the character is nodding.

The user of the terminal can make the character act as above by conducting a control operation on his or her own terminal. During a call between intimate friends, i.e., a first party and a second party, the first party makes a character of the second party act according to his or her wish. The terminal is used as a so-called entertainment device.

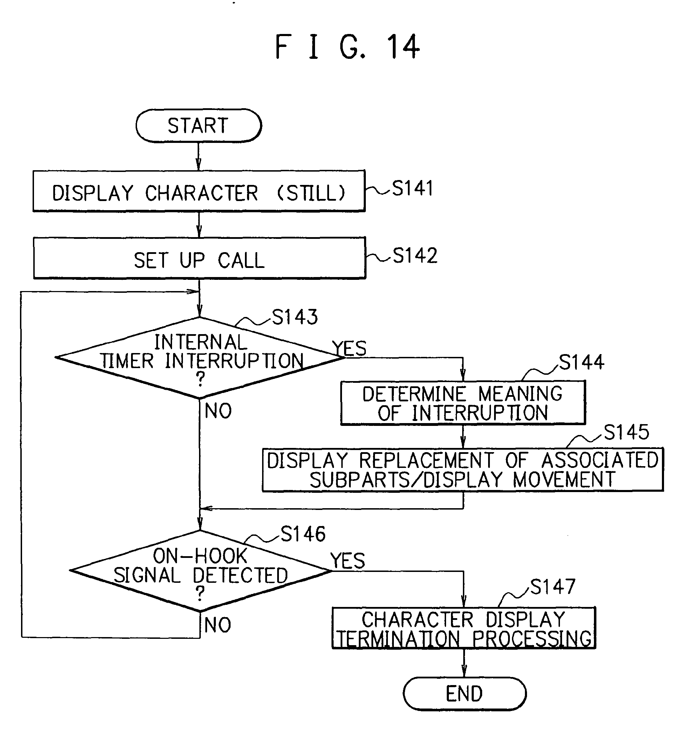

Referring to FIG. 14, the flowchart includes a step of displaying a still picture of a character (S141), a setup step of a call (S142), and a step of monitoring by the controller occurrence of an internal timer interruption (S143). At occurrence of interruption, the controller determines the meaning of the interruption (S144) and replaces associated subparts according to the meaning and displays the character or moves associated subparts (S145). When the internal timer interruption repeatedly takes place, the character conducts an action in an animated picture. The movement of associated subparts is achieved by changing the coordinates of the subparts.

### Fourth embodiment

A mobile telephone terminal of the fourth embodiment is capable of integrally conduct the character display in response to the audio level, the operation according to the internal timer interruption, and the operation based on the control signal.

Since most parts of the first to third embodiments described above apply to the fourth embodiment, description will be given mainly of inherent points of the fourth embodiment. The signal processing section of FIG. 11 can be applied also to the fourth embodiment.

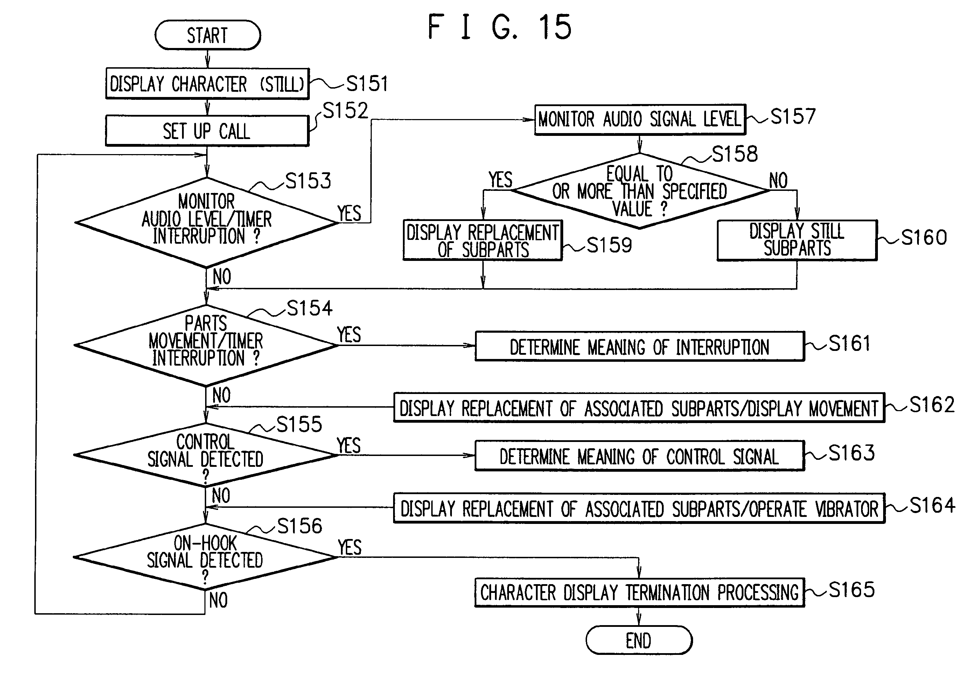

Referring to FIG. 15, the flowchart includes a step of displaying a still picture of a character (S151), a call setup step (S152), and steps of displaying an animation of a character. At occurrence of interruption of a timer to monitor an audio level (S153), the controller checks the audio level (S157). If the level is equal to or more than a specified value, the controller replaces subparts of the character (S159). Since the mouth and its periphery primarily move in response to voices and sounds, the controller replaces, for example, subparts of the mouth in this situation. If the level is less than the specified value, for example, a subpart for a still picture of a character with a closed mouth is displayed (S160).

If the interruption of the audio level monitor timer has not occurred, the controller checks the presence or absence of interruption caused by operating the terminal for the character presented on the display of the terminal (S154). If such interruption is present, the controller determines the meaning of the interruption (S161) and replaces or moves associated subparts to display the character. An example of interruption of this kind has already been described for the third embodiment.

If no interruption occurs in step S154, the controller detects the presence or absence of a control signal sent from the other party's terminal (S155). When the control signal is sensed, the controller specifies the meaning of the control signal (S163) and then replaces subparts of the associated part or operates the vibrator (S164). An example of the control signal has already been described for the second embodiment.

If the control signal is not detected, the controller attempts to detect an on-hook signal (S156). If the on-hook signal is sensed, the controller executes character display termination processing (S165). If the on-hook signal is not sensed, the controller returns to a step for audio level monitoring timer interruption check (S153) to execute processing.

In the embodiment, according to reactions and wishes of the speaker during a call, it is possible to display the character in various actions.

### Fifth embodiment

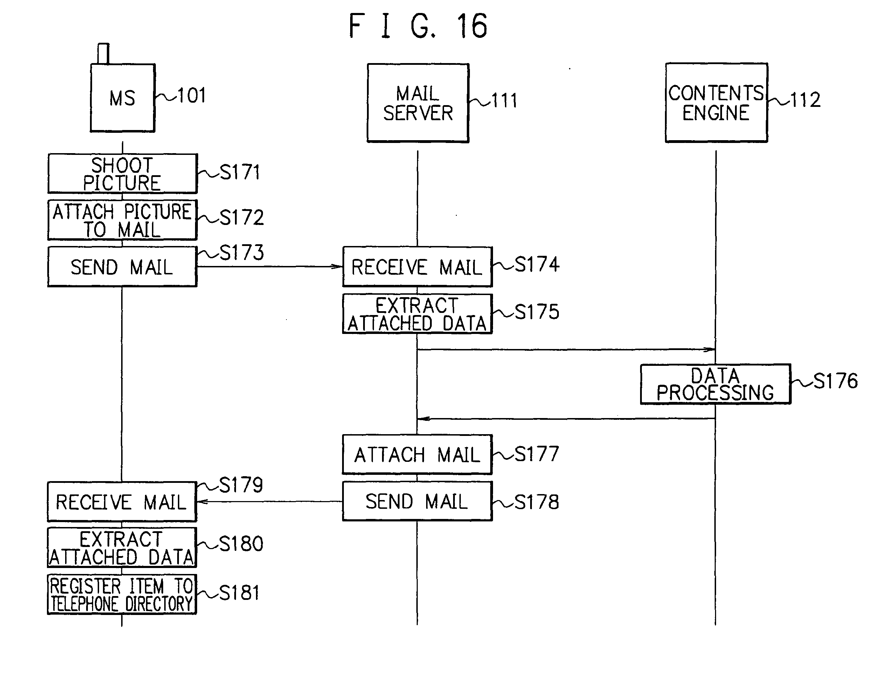

Referring next to FIG. 16, description will be given of a service method of providing character data.

In FIG. 16, the reference numeral 101 denotes a mobile telephone terminal, 111 denotes a mail server, and 112 denotes a contents production server or a contents engine. For example, a face of an owner of the terminal 101 is shot (S171) by the camera 23 (shown in FIG. 2) of the terminal 101. Thereafter, a file of a picture shot by the camera 23 is attached to mail with a mail function (S172) and the mail is sent to the mail server 111 of a service provider to provide character data (S173). When the mail is received (S174), the mail server 111 extracts the attached file (S175) and transfers the file to the contents engine 112. Having received the file, the contents engine 112 processes data of the file (S176), which will be described later, and then delivers the data to the mail server 111. The mail server 111 attaches the worked or processed data file to mail (S177) to send the mail via a network to the terminal 101 (S178).

On receipt of the mail (S179), the terminal 101 extracts the data file (S180) and saves the file in the character data area 311 of the storage 309 (shown in FIG. 3) and then registers an ID of the character to the telephone directory data section 312 with a correspondence established between the ID and a telephone number (S181 in FIG. 7).

Data processing of the contents engine will be described by referring to FIG. 8. When photo or picture data is received, the contents engine conducts a retouch process to simplify the data into data of a character image (S81). Next, the engine extracts main parts of the character to resultantly obtain a plurality of parts (S82). This is achieved by trimming a contour of the character. The engine then edits the parts to produce a plurality of variations representing modified contours thereof (S83). In this operation, a natural form of each part is considerably deformed or simplified. Through these processes, the total amount of the resultant data is remarkably reduced as compared with the photo data.

As described for the first embodiment in conjunction with FIG. 10, the respective subparts include information as to a point or a display reference point and coordinates of the point. According to the information, the subparts can be combined with each other to display a character.

The parts and the subparts created as above are classified into groups. Character data including such parts and subparts is sent via the mail server to the mobile telephone terminal.

### Sixth embodiment

In accordance with the present invention, the embodiments may be modified and changed in many variations. For example, the monitoring of the audio level is carried out using the analog signal on the output port of the codec 42 in FIGs. 4 and 11. However, it is also possible to monitor the audio level on an input port of the codec 42.

The signal processor of FIG. 11 includes the control signal inserting section 44 and the control signal extracting section 45 to send a control signal for the character display operation. However, it is also possible that a first terminal sends mail to a second terminal for notification such that the notification is used as a control signal to make the character move or conduct an action. In this situation, although it is difficult to operate the other party's terminal in real time, the control signal inserting section and the control signal extracting section are not required. This simplifies the configuration of the mobile telephone terminal.

In the second embodiment, the operation of the other party's terminal in response to the key operation is not restricted by that shown in FIG. 12. For example, the color of the background on the display of the other party's terminal may be changed in response to the key operation. Or, the display colors may be changed in some parts of the character and particular parts such as the eyes and the mouth.

In the description of the embodiments, the portable telephone terminal includes a camera function. However, when the terminal does not include the camera function, the character production request may be issued from an apparatus such as a PC via the Internet to the mail server. In this case, a PC address of the request source is different than an address of the portable telephone terminal which uses the character. Therefore, the request is sent to the character production service provider together with a specification of a final address.

For a mobile telephone terminal not having the mail function, the character production request is also issued from a PC or the like to the mail server. In this case, the PC or the like receives the produced character data. To finally store the character data in the terminal, the data is transferred using a serial or bluetooth interface.

While the present invention has been described with reference to the particular illustrative embodiments, it is not to be restricted by those embodiments but only by the appended claims. It is to be appreciated that those skilled in the art can change or modify the embodiments without departing from the scope and spirit of the present invention.

## Claims

1. A portable telephone terminal, comprising:
an image display;
a storage for storing therein character data representing a character;
an audio level monitor for detecting a level of an audio signal; and
a controller for displaying an animation of a character in response to an audio level.

2. A portable telephone terminal according to claim 1, further comprising:
a control signal inserting section for inserting a control signal controlling a character of a portable telephone terminal of a communicating party; and
a control signal extracting section for extracting a control signal controlling a character from a receive signal received from a portable telephone terminal of the other party.

3. A portable telephone terminal, comprising:
an image display;
a storage for storing therein character data representing a character; and
a controller for displaying an action of a character on the image display in response to a control signal sent from a portable telephone terminal of the other party.

4. A portable telephone terminal, comprising:
an image display;
a storage for storing therein character data representing a character;
an audio level monitor for detecting a level of an audio signal; and
a controller for displaying an animation of a character in response to an audio level, wherein
the character displayed on the portable telephone terminal can be made to act by operating keys of the portable telephone terminal.

5. A portable telephone terminal in accordance with claim 1, 2, 3 or 4, wherein:
the character data includes a plurality of character parts configuring main sections of the character; and
the character parts includes a plurality of subparts obtained by modifying the contours of the main sections of the character.

6. A portable telephone terminal in accordance with claim 1, 2, 3 or 4, wherein:
the character data includes a plurality of character parts configuring main sections of the character;
the character parts includes a plurality of subparts obtained by modifying the contours of the main sections of the character; and
the controller displays the animation by changing a subpart of a particular character part of the character in response to an audio level.

7. A portable telephone terminal in accordance with claim 1, 2, 3 or 4, wherein:
the character data includes a plurality of character parts configuring main sections of the character;
the character parts includes a plurality of subparts obtained by modifying the contours of the main sections of the character;
the controller displays the animation by changing a subpart of a particular character part of the character in response to an audio level; and
the particular character part is a section of a mouth of the character.

8. A portable telephone terminal in accordance with claim 1, 2, 3 or 4, wherein:
the character data includes a plurality of character parts configuring main sections of the character;
the character parts includes a plurality of subparts obtained by modifying the contours of the main sections of the character;
the controller displays the animation by changing a subpart of a particular character part of the character in response to an audio level; and
the character is a character imitating an owner of the portable telephone terminal assigned with a telephone number.

9. A portable telephone terminal, comprising:
an image display;
a storage for storing therein character data representing a character;
an audio level monitor for detecting a level of an audio signal;
a controller for displaying an animation of a character on the image display in response to an audio level; and
a control signal generator for generating a control signal controlling a vibrator of a portable telephone terminal of the other party in response to a key operation.

10. A portable telephone terminal in accordance with claim 9, further comprising a control signal extracting section for extracting a control signal controlling the vibrator from a receive signal received from the other party.

11. A portable telephone terminal, comprising:
an image display;
a storage for storing therein character data representing a character;
an audio level monitor for detecting a level of an audio signal;
a controller for displaying an animation of a character on the image display in response to an audio level; and
a control signal inserting section for inserting a control signal generated in response to a key operation, the control signal making image display of a portable telephone terminal of the other party flash a background of a display screen.

12. A portable telephone terminal in accordance with claim 11, further comprising a control signal extracting section for extracting a control signal from a receive signal received from a portable telephone terminal of the other party, the control signal flashing a background of a display screen.

13. A portable telephone terminal, comprising:
an image display;
a storage for storing therein character data representing a character;
an audio level monitor for detecting a level of an audio signal;
a controller for displaying an animation of a character on the image display in response to an audio level;
a control signal inserting section for inserting a control signal controlling a character of a portable telephone terminal of the other party;
a control signal extracting section for extracting a control signal controlling a character from a receive signal received from a portable telephone terminal of the other party; and
a storage for storing therein telephone directory data, wherein
a character is stored in the storage with a link established between the character and a telephone number in the telephone directory data.

14. A portable telephone terminal in accordance with claim 13, wherein the character linked with the telephone number is a character of an owner of a portable telephone terminal assigned with the telephone number.

15. A control method of controlling a portable telephone terminal, comprising the steps of:
transmitting a call signal including information on a telephone number by a call issuing operation;
retrieving a character stored in association with a telephone number and displaying the character;
having a conversation after a call is set up to establish communication with a portable telephone terminal of the other party;
monitoring an audio signal level of an audio signal received in the step of having a conversation; and
displaying an animation of the character when the audio level is equal to or more than a predetermined level.

16. A control method of controlling a portable telephone terminal, comprising the steps of:
retrieving, in response to information on a telephone number included in a call signal received from the other party, a character stored in association with a telephone number;
displaying the character retrieved;
having a conversation after a call is set up to establish communication with a portable telephone terminal of the other party;
monitoring an audio signal level of an audio signal received in the step of having a conversation; and
displaying an animation of the character when the audio level is equal to or more than a predetermined level.

17. A control method of controlling a portable telephone terminal in accordance with claim 25 or 26, further comprising the step of displaying an animation of a character by a key operation in the step of having a conversation.

18. A control method of controlling a portable telephone terminal in accordance with claim 25 or 26, further comprising the step of operating a vibrator of the portable telephone terminal by a key operation in the step of having a conversation.

19. A service providing method for providing character data to display an animation of a character on a portable telephone terminal, comprising the steps of:
attaching by the portable telephone terminal a picture data file to an e-mail message to be transmitted;
receiving by a mail server the mail and extracting the picture data file from the mail;
transferring the picture data file to a contents processing server;
dividing by the contents processing server the picture data file into a plurality of parts of main sections of the character and creating a plurality of subparts by modifying the contours of the main sections;
transferring a processed file obtained as a result of the preceding step to the mail server; and
attaching by the mail server the processed file to mail and transmitting the mail to the portable telephone terminal.

20. A service providing method in accordance with claim 19, wherein the step of obtaining the main sections comprises the steps of:
processing the picture data file to produce simplified picture image data; and
dividing the data into main sections.

21. A service providing method in accordance with claim 19, wherein the portable telephone terminal extracts the processed data file and registers the file to a telephone directory.

22. A server for creating character data to display an animation of a character on a portable telephone terminal, comprising:
a character part generator for creating character parts of main sections of a picture based on a picture data file; and
a subpart generator for creating a plurality of subparts by modifying the character parts of the main sections.

23. A program for making a server create character data to display an animation of a character on a portable telephone terminal, the program making the server execute the steps of:
creating character parts of main sections of a picture based on a picture data file; and
creating a plurality of subparts by modifying the character parts of the main sections.

24. A program for making a portable telephone terminal execute the steps of:
requesting an operator to specify a telephone number;
setting up a call using information including the telephone number;
searching through a telephone directory;
selecting and displaying a character registered to the telephone directory; and
changing, in response to the setup of the call, a subpart representing a modified contour corresponding to a character part of a main section of the character and displaying an animation of the character.

25. A program in accordance with claim 24, wherein the step of displaying the animation comprises the step of changing subparts in response to a receive audio signal received from the other party.

26. A computer-readable recording medium for a computer making a portable telephone terminal execute the steps of:
requesting an operator to specify a telephone number;
setting up a call using information including the telephone number;
searching through a telephone directory;
selecting and displaying a character registered to the telephone directory; and
changing, in response to the setup of the call, a plurality of subparts representing modified contours corresponding to a character part of a main section of the character and displaying an animation of the character.
